Europäisches Patentamt

(19) European Patent Office

Office européen des brevets

(11) Publication number: **0 055 306**
**B1**

(12) **EUROPEAN PATENT SPECIFICATION**

(45) Date of publication of patent specification: **27.03.85**

(21) Application number: **80201237.7**

(22) Date of filing: **29.12.80**

(51) Int. Cl.⁴: **A 01 J 23/00,** A 01 J 21/02,
A 23 C 15/14

(54) Apparatus for melting refrigerated butter.

(43) Date of publication of application:
**07.07.82 Bulletin 82/27**

(45) Publication of the grant of the patent:
**27.03.85 Bulletin 85/13**

(84) Designated Contracting States:
**AT BE CH DE FR GB IT LI LU NL SE**

(56) References cited:
**CH-A- 238 991**
**DE-C- 421 857**
**US-A-1 447 250**
**US-A-2 056 711**
**US-A-2 563 237**

(73) Proprietor: **ALFA-LAVAL N.V.**
**Stroombaan 4**
**NL-1181 VX Amstelveen (NL)**

(72) Inventor: **Van Vlaenderen, Johannes M. H.**
**Parelvisserslaan 76**
**NL-1183 RN Amstelveen (NL)**

(74) Representative: **Jacobson, Gerard et al**
**Octrooibureau Los en Stigter BV**
**Weteringschans 96**
**NL-1017 XS Amsterdam (NL)**

Courier Press, Leamington Spa, England.

## Description

The invention relates to an apparatus for melting a refrigerated substance, such as butter, cream or the like, said apparatus comprising a frame, a grating rigidly attached to said frame in a substantially horizontal plane, and comprising a plurality of tubes adapted to receive a hot medium therethrough, wherein a block of substance to be melted can be pressed against the grating in such a manner that the substance passes into the molten state as a result of the contact with the heated tubes and is discharged in liquid form through the grating.

In many prior-art embodiments of this type of apparatus, the block of substance which rests upon the grating is pressed upon this grating solely under the force of its own mass. Accordingly, the substance melts in a slow fashion only, causing the residence time of the molten layer which develops between the gradually shrinking block of substance and the heated tube walls to be unduly long, so that scorching of the melt is a frequent occurrence. This makes it necessary to limit the amount of heat supplied to the tubes, which entails a restriction of the production of molten butter per unit time.

An apparatus of this type is for example disclosed in DE—C—421 857. This reference further discloses the possibility of using mechanical pressure in order to press the block of substance against the grating. However, the molten substance, while dripping off along the part of the wall facing away from the block of butter, continues to be exposed to heat from the heated tube, so that scorching can take place in that area as well. Although the extent to which this happens is already reduced when additional force is applied to the block of butter, causing the passage of the melt to be accelerated, there still is a high risk in scorching.

The invention aims to provide an apparatus of the above-mentioned kind, at which this disadvantage is obviated and which shows a higher production capacity per unit of time without requiring a larger area of floor space.

To this end, the apparatus according to the invention is characterized in that a mechanically energized pressing means is displaceably associated relative to said frame for pressing a block of said substance which is to be melted against and through said grating, wherein that wall portion of each tube facing away from said pressing means is provided with a heat barrier.

In this manner, a reduced amount of heat is transmitted to the molten substance, whereby a higher temperature of the tubes can be selected, which results in an increased production per unit of time. By using the mechanically energized pressing means the layer of molten substance between the block and the heated tubes will flow off more rapidly, which layer is at the same time thinned down. This first of all reduces the residence time in that area, also reducing the chance of scorching, and in the second place the heat transfer is improved because of the smaller layer thickness.

Such a heat barrier can efficiently comprise a strip of thermally insulating material which is applied to the inside of the afore-mentioned wall portion.

Furthermore, in order to reduce the residence time of the molten substance at the tube or in the vicinity thereof, the dripping process is stimulated according to a further embodiment of the invention by providing said wall portion with sharp edges extending in the longitudinal direction of the tube. These edges are preferably formed by aprons which are at least substantially perpendicular to the plane of the tubular grating and which act as dripping baffles.

Optimum results are obtained from the afore-mentioned measures by selecting tubes which have an at least substantially triangular shape in transverse section. With such a design, the block to be melted is faced by one angular edge which, when viewed in cross-section, may have a moderate fillet radius. Such an angular edge results in a higher specific surface pressure of the substance upon the upper side of the tube, so that the molten layer flows out all the more easily between the unmelted substance and the tube wall.

The other two angular edges can be easily manufactured in a sharp-cornered form on account of the triangular transverse section of the tube, so that sharp edges as described hereinabove are available without special measures having to be taken.

The pressing means comprises a press plate which presses upon the block of substance, to which it must not be allowed to adhere at the end of each impact stroke. In order to prevent such adhesion and to obtain a reliable separation of the press plate from the substance, the face of the press means which faces the grating may be provided with an inflatable covering, which may consist of a rubber plate which is hermetically secured on the edges of the press plate, inflation being accomplished through a hollow bearing rod of the press plate.

The invention is suitable for implementation with pressing means comprising a tubular grating according to the invention, so that the block of substance is caused to melt at both ends simultaneously.

In order to explain the invention, a number of examples of embodiment will be described, reference being made to the drawings.

Figure 1 is a diagrammatic sectional view of part of the apparatus to which the invention relates;

Figure 2 shows on an enlarged scale the part marked II in Fig. 1.;

Figure 3 is a sectional view of a first embodiment of a grating tube forming part of the apparatus of Figs. 1 and 2;

Figure 4 is a sectional view of the grating tube according to a variant embodiment;

Figure 5 is a diagrammatic sectional view of a variant embodiment of the apparatus where the press is likewise designed as a grating for the melting process;

Figure 6 is a diagrammatic view along the arrow VI in Fig. 5;

Figure 7 is a view of the press which is furnished with an inflatable wall.

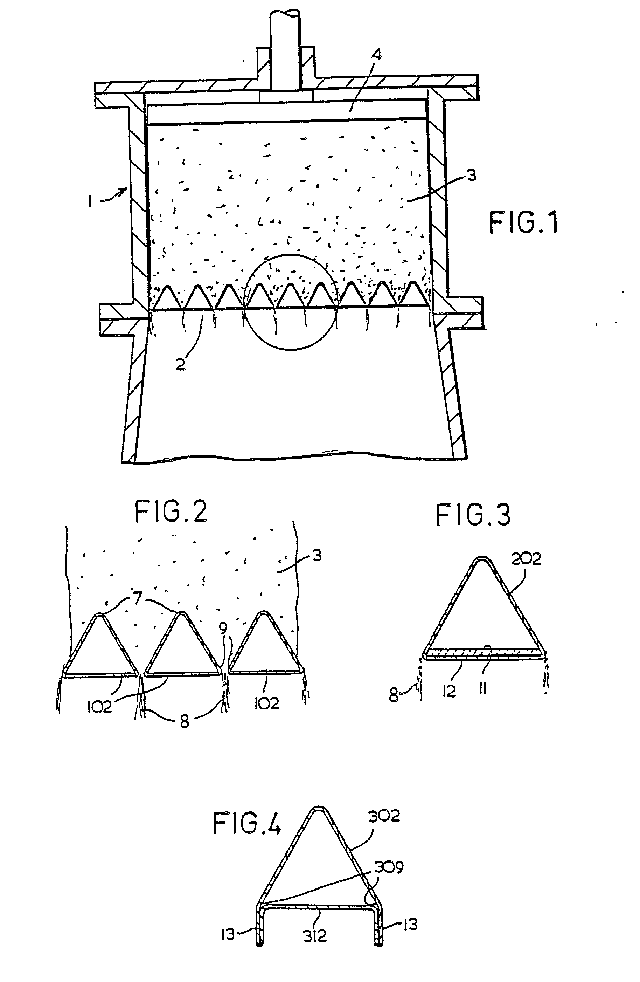

Figure 1 shows the frame 1 of the melting apparatus, the tubular grating 2 which is rigidly attached to the frame, a refrigerated block of butter 3 which must be caused to melt, and a press 4 with up and down movement, operated with power means that are not shown. A heating medium, such as water at a temperature of 105 C, is pumped in any prior-art manner through the tubular grating 2. At the same time, the press 4 is energized so as to force the block 3 through the tubular grating 2.

Figure 2 is a more detailed view of the course of the melting process. The block of butter 3 is forced between the tubes, butter being liquefied between the walls of the tubes 102 and the block of butter 3. Because of the relatively tapering form of the tops 7 of the substantially triangular tubes 102, the liquid butter is discharged rapidly and drips in an unbroken flow of streams 8 from the sharp-cornered lower edges 9.

Figure 3 shows a tube 202 forming part of the apparatus of Figures 1 and 2, which is provided with an insulating strip 11 for the purpose of obtaining a heat barrier. As a result, the wall 12 transmits less heat to the butter 8 which is dripping down, thus reducing the risk of scorching. This also allows the temperature of the heating medium to be raised to a higher value than would have been possible without heat barrier, so that an increased production can be achieved.

Figure 4 shows a tube 302 which is provided with aprons 13 forming projecting walls along the angular edges 309. These aprons 13 enhance the dripping process of the molten butter; the lower wall 312 is provided additionally with the heat barrier as shown in Fig. 3.

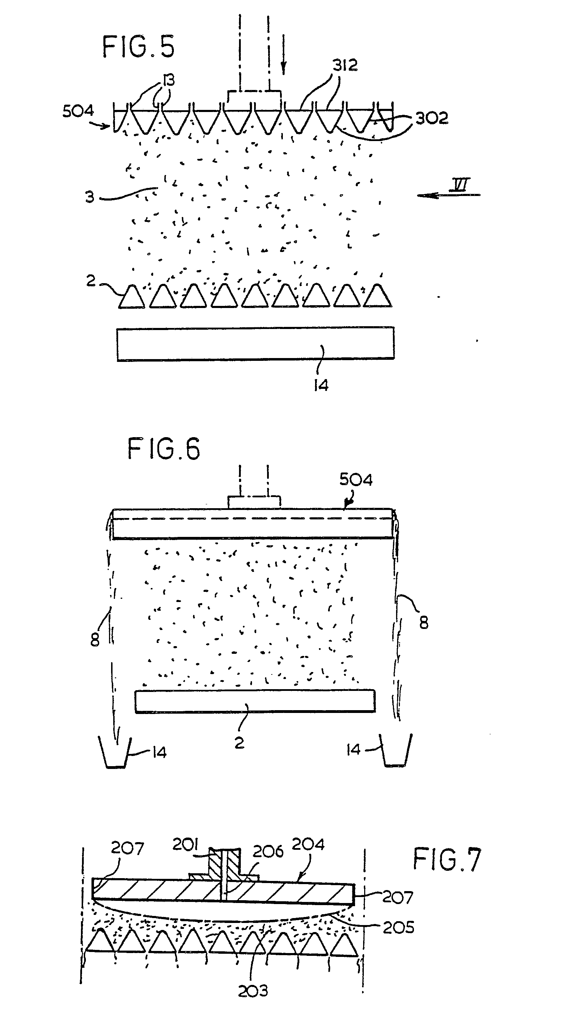

Figure 5 and 6 are diagrammatic views of a variant of the invention according to which the pressing function (of the press 4 in Fig. 1) is performed by a tubular grating 50, composed of tubes 302 as shown in Fig. 4. This causes the butter to melt at the upper end of the block as well, which results in the output being doubled. The butter which has melted at the top flows off along the conduit formed by the wall 312 and the aprons 13 (Fig. 4), and drips off at the ends of the tubes 302, which must have a sufficient length for this purpose. The molten butter is conveyed further through chutes 14.

Figure 7 shows a variant embodiment 204 of the press. The press plate 204 is covered with a flexible facing plate 205, for instance of rubber, which is hermetically sealed to the edges 207 around the plate 204. The press plate 204 is attached to a hollow press rod 201, the press plate 204 being provided with an opening 206 that connects to the hollow rod 201. In the situation shown, the block of butter 203 has melted down so far that the input of a new charge is required. During the operation of withdrawing the press plate 204 by means of the press rod 201, air is simultaneously blown through the hollow rod, causing the facing plate 205 to bulge, as indicated by the dash-and-dot line in Fig. 7. This also prevents the butter from sticking to the press plate 204.

The hollow press rod 201 can also be used for cleaning the apparatus, by fitting the press plate 204 to it in such a way that it can be readily removed, whereupon a cleaning liquid is discharged in a forceful stream through a sprayer (not shown) which is connected to the hollow press rod 201.

The invention is not restricted to the forms of embodiment shown, several variants and additions being possible within the scope of the claims. Thus, it is naturally possible to vary the substantially triangular cross section of the tubes, and the top parts 7 thereof may be more rounded or more acute than is indicated in the figures.

**Claims**

1. Apparatus for melting a refrigerated substance, said apparatus comprising a frame, a grating rigidly attached to said frame in a substantially horizontal plane, and comprising a plurality of tubes adapted to receive a hot medium therethrough, wherein a block of substance to be melted can be pressed against the grating in such a manner that the substance passes into the molten state as a result of the contact with the heated tubes and is discharged in liquid form through the grating, characterized in that a mechanically energized pressing means (4, 104, 204, 504) is displaceably associated relative to said frame (1) for pressing a block (3) of said substance which is to be melted against and through said grating (2), wherein that wall portion (12, 312) of each tube facing away from said pressing means is provided with a heat barrier (11).

2. Apparatus according to claim 1, characterized in that said heat barrier comprises a strip (11) of thermally insulating material which is applied to the inside of said wall portion (12, 312).

3. Apparatus according to claim 1 or 2, characterized in that said wall portion is provided with sharp edges (9) extending in the longitudinal direction of the tube.

4. Apparatus according to claim 3, characterized in that said sharp edges are formed by aprons (13) which extend along said tubes and are at least substantially perpendicular to the plane of said tubular grating.

5. Apparatus according to any one of the preceding claims, characterized in that said tubes (102, 202, 302) have a substantially triangular shape in transverse section.

6. Apparatus according to any one of the preceding claims, characterized in that the face of the pressing means (204) which faces said grating is provided with an inflatable covering (205).

7. Apparatus according to any one of the preceding claims, characterized in that said pressing means (504) comprises a grating of tubes (302) having the features recited in any one of the preceding claims.

## Revendications

1. Appareil pour la fusion d'une substance réfrigérée, cet appareil comprenant un bâti, une grille fixée rigidement audit bâti dans un plan sensiblement horizontal et constituée par plusieurs tubes destinés à être parcourus par un fluide chaud, un bloc de substance devant être fondu pouvant être pressé contre la grille de telle' sorte que la substance passe à l'état fondu, par suite de son contact avec les tubes chauffés, et soit déchargée sous forme liquide à travers la grille, caractérisé par le fait qu'un moyen de pression (4, 104, 204, 504) mû mécaniquement est associé avec mobilité audit bâti (1) afin de presser, contre et à travers ladite grille (2), un bloc (3) de ladite substance devant être fondue, la zone (12, 312) de la paroi de chaque tube tournée à l'écart dudit moyen de pression étant munie d'une barrière de chaleur (11).

2. Appareil selon la revendication 1, caractérisé par le fait que ladite barrière de chaleur consiste en une bande (11) en un matériau thermiquement isolant, qui est appliquée contre la face interne de ladite zone de paroi (12, 312).

3. Appareil selon la revendication 1 ou 2, caractérisé par le fait que ladite zone de paroi est munie d'arêtes vives (9) s'étendant dans le sens longitudinal du tube.

4. Appareil selon la revendication 3, caractérisé par le fait que lesdites arêtes vives sont formées par des tabliers (13) qui s'étendent le long desdits tube et sont au moins sensiblement perpendiculaires au plan de ladite grille tubulaire.

5. Appareil selon l'une quelconque des revendications précédentes, caractérisé par le fait que lesdits tubes (102, 202, 302) présentent une forme sensiblement triangulaire observée en coupe transversale.

6. Appareil selon l'une quelconque des revendications précédentes, caractérisé par le fait que la face du moyen de pression (204) située en regard de ladite grille est pouvue d'un recouvrement gonflable (205).

7. Appareil selon l'une quelconque des revendications précédentes, caractérisé par le fait que ledit moyen de pression (504) consiste en une grille de tubes (302) présentant les caractéristiques énoncées dans l'une quelconque des revendications précédentes.

## Patentansprüche

1. Vorrichtung zum Schmelzen einer gekühlten Substanz, bestehend aus einem Rahmengestell, einem in einer im wesentlichen wagerechten Ebene starr damit verbundenen Rost, welcher aus mehreren, für den Durchfluß eines heißen Mediums ausgebildeten Rohren besteht, wobei ein Block der zu schmelzenden Substanz derart gegen den Rost gepreßt werden kann, daß die Substanz infolge des Kontaktes mit den beheizten Rohren in den geschmolzenen Zustand übergeht und in flüssiger Form durch den Rost hindurch abfließt, dadurch gekennzeichnet, daß ein mechanisch aktiviertes Druckorgan (4, 104, 204, 504) verschiebbar im Rahmengestell (1) angeordnet ist, um einen Block (3) aus der zu schmelzenden Substanz gegen und durch den Rost (2) zu pressen, wobei der vom Druckorgan fortweisende Wandbereich (12, 312) eines jeden Rohres mit einer Wärmebarriere (11) versehen ist.

2. Vorrichtung nach Anspruch 1, dadurch gekennzeichnet, daß die Wärmebarriere aus einem Streifen (11) aus wärmeisolierendem Material besteht, welcher an der Innenseite des Wandbereiches (12, 312) angebracht ist.

3. Vorrichtung nach Anspruch 1 oder 2, dadurch gekennzeichnet, daß der Wandbereich mit in Längsrichtung des Rohres verlaufenden scharfen Kanten (9) versehen ist.

4. Vorrichtung nach Anspruch 3, dadurch gekennzeichnet, daß die scharfen Kanten durch Schürzen (13) gebildet werden, welche längs der Rohre und zumindest im wesentlichen rechtwinklig zur Ebene des rohrförmigen Rostes verlaufen.

5. Vorrichtung nach einem der vorhergehenden Ansprüche, dadurch gekennzeichnet, daß die Rohre (102, 202, 302) einen im wesentlichen dreieckigen Querschnitt haben.

6. Vorrichtung nach einem der vorhergehenden Ansprüche, dadurch gekennzeichnet, daß die zum Rost hinweisende Fläche des Druckorganes (204) mit einer aufblasbaren Abdeckung (205) versehen ist.

7. Vorrichtung nach einem der vorhergehenden Ansprüche, dadurch gekennzeichnet, daß das Druckorgan (504) aus einem Rost aus Rohren (302) mit den in vorangehenden Ansprüchen angegebenen Merkmalen besteht.

FIG.1

FIG.2

FIG.3

FIG.4

FIG.5

FIG.6

FIG.7